Europäisches Patentamt

European Patent Office

Office européen des brevets

(11) Veröffentlichungsnummer: **0 218 227**
**A2**

(12) **EUROPÄISCHE PATENTANMELDUNG**

(21) Anmeldenummer: 86113789.1

(22) Anmeldetag: 04.10.86

(51) Int. Cl.⁴: **G02B 26/02**

(30) Priorität: 09.10.85 CH 4352/85

(43) Veröffentlichungstag der Anmeldung:
15.04.87 Patentblatt 87/16

(84) Benannte Vertragsstaaten:
AT BE CH DE ES FR GB GR IT LI LU NL SE

(71) Anmelder: Schenk & Co.
Gewerbestrasse 10
CH-6330 Cham(CH)

(72) Erfinder: Schenk, Max
In der Bünten
CH-5634 Merenschwand(CH)
Erfinder: Schenk, Hans
Brand
CH-5637 Beinwil(CH)

(74) Vertreter: Blum, Rudolf Emil Ernst et al
c/o E. Blum & Co Patentanwälte Vorderberg
11
CH-8044 Zürich(CH)

(54) **Tastatur zur Schaltung von Lichtsignalen.**

(57) Auf einer Auflage (1) sind Lichtleiter (5,6) vorgesehen, welche in bestimmten Bereichen (9) signalmässig gekoppelt sind. Bei Druck auf eine Deckfolie (2) oberhalb der Bereiche (9) wird der Kopplungsgrad verändert. Dies führt zu einer Aenderung des Lichtsignals am Ausgang der Tastatur. Die Tastatur ermöglicht das einfache und störungsfreie Schalten von Lichtsignalen mit wenig Aufwand.

Fig.1

Fig.2

## Tastatur zur Schaltung von Lichtsignalen

Die Erfindung betrifft eine Tastatur zur Schaltung von Lichtsignalen.

Verschiedenartige Tastaturen, auch sogenannte Folientastaturen, sind zur Schaltung von elektrischen Signalen bekannt. Zur Schaltung von Lichtsignalen können solche Tastaturen nur durch den Einsatz von optisch-elektrischen Schnittstellen verwendet werden. Dies erhöht natürlich den Aufwand zur Schaltung von Lichtsignalen beträchtlich. Dies ist besonders nachteilig, da für viele Anwendungen der Einsatz von Lichtsignalen zu Steuerzwekken vorteilhaft ist, aber auch in ansonsten rein elektrischen Systemen kann es vorteilhaft sein, eine Tastatur, welche ausserhalb der elektrischen Abschirmung liegt oder über lange Signalwege angeschlossen werden muss, mit Lichtsignalen zu betreiben. Dies etwa aus Gründen der Störsicherheit bei starken elektro-magnetischen Pulsen in der Umgebung oder der elektromagnetischen Verträglichkeit im allgemeinen.

Der Erfindung liegt deshalb die Aufgabe zugrunde, eine einfache und billig herstellbare Tastatur für Lichtsignale zu schaffen. Dies wird durch die kennzeichnenden Merkmale des Patentanspruches 1 erreicht.

Bevorzugterweise weist die Tastatur einen Folienaufbau auf, mit mindestens einer Lichtleiterelemente bildenden Folie.

Im folgenden werden Ausführungsbeispiele der Tastatur anhand der Zeichnungen näher beschrieben. Dabei zeigt:

Fig. 1 eine perspektivische Schemazeichnung einer erfindungsgemässen Tastatur mit Schichtaufbau;

Fig. 2 einen Schnitt entlang der Linie A-A von Fig. 1 mit einer Detailansicht der Koppelungszone;

Fig. 3 einen Schnitt durch eine weitere Ausführungsform mit enger gekoppelten Lichtleitern;

Fig. 4 einen Schnitt durch eine weitere Ausführungsform; und

Fig. 5 einen Schnitt durch eine Ausführungsform mit einem Koppelungselement.

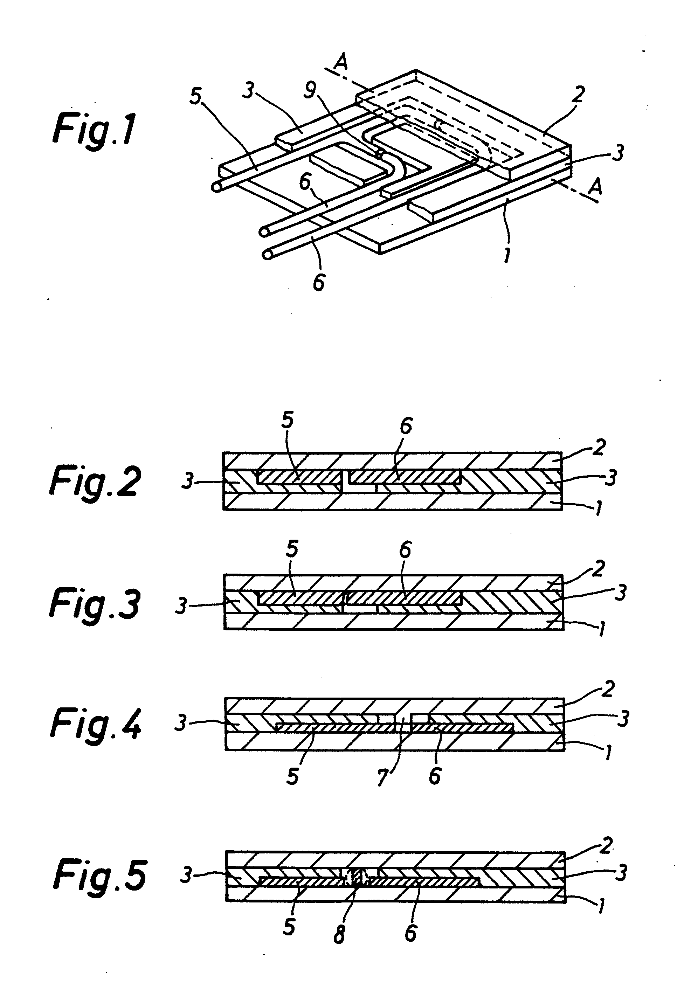

Figur 1 zeigt in stark schematischer Form eine perspektivische Ansicht einer erfindungsgemässen Tastatur, welche den Schichtaufbau einer Folientastatur aufweist. Dabei sind einzelne Folien nur zum Teil dargestellt, um den Aufbau ersichtlich zu machen. Eine erste Folie oder Platte bildet eine Auflage 1 für die weiteren Teile der Tastatur. Für die Auflage 1 kann dabei eine Kunststoff-oder Metallfolie verwendet werden, oder auch eine stabile Platte aus diesen Materialien. Die Auflage trägt Lichtleiterelemente 5 und 6. Gezeigt sind dabei zylindrische Lichtleiter, welche aus einer Faser bestehen können oder aus einer Mehrzahl von dünneren Fasern. Die Lichtleiter können aber auch beliebige andere Formen aufweisen oder können z.B. auch von einer lichtleitenden Folie oder Platte gebildet werden, welche zur Bildung verschiedener Lichtleitpfade unterteilt wird.

Wird eine lichtleitende Folie oder Platte genügender Festigkeit vorgesehen, so kann auch auf die Auflage 1 verzichtet werden. Lichtleiter sind in vielen Ausführungsformen bekannt und marktüblich. Mit der vorliegenden Impulstastatur werden in der Regel nur unmodulierte Steuersignale geschaltet, was an die Uebertragungsqualität der verwendeten Lichtleiter keine hohen Anforderungen stellt, doch können die eingesetzten Lichtleiterelemente gemäss der spezifischen Anforderungen an die Tastatur gewählt werden.

Im gezeigten Beispiel bildet der Lichtleiter 5 den einen Pfad und weist zwei Lichtaustrittsstellen auf der Auflage 1 auf. An jede dieser Lichtaustrittsstellen ist in einer Koppelungszone 9 einer der zweiten Lichtleiter 6 angekoppelt, worunter verstanden wird, dass das Licht vom Lichtleiter 5 in den Lichtleiter 6 übertreten kann und umgekehrt. Die beiden Lichtleiter 6 bilden je einen separaten Pfad für die Lichtsignale. Durch Druck auf die Deckfolie 2 (nur teilweise dargestellt) wird der Koppelungsgrad der Lichtleiter 5 und 6 in den Koppelungszonen 9 verändert. Die Ausbildungen der Tastatur, welche dies ermöglichen, sind in der stark - schematisierten Figur 1 nicht dargestellt; es wird dafür auf die Schnitte entlang der Linie A-A von Figur 1 verwiesen, welche in den Figuren 2 bis 5 gezeigt sind. Die Deckfolie 2 kann ebenfalls aus Kunststoff oder Metall bestehen. Die Dicke dieser Folie ist in weitem Bereich wählbar; auch Kunststoff oder Metallplatten können anstelle der Folie 2 vorgesehen werden, solange nur eine genügende Druckübertragung über die Platte oder Folie 2 die Aenderung des Koppelungsgrades erlaubt.

Zwischen der Auflage 1 und der Deckplatte bzw. Folie 2 ist im gezeigten Beispiel eine Abstandsfolie 3 angeordnet. Diese weist in Figur 1 im wesentlichen die Dicke der Lichtleiterelemente 5,6 auf. Aus den gezeigten Schnitten hingegen ist ersichtlich, dass bei den dort gezeigten Beispielen die Folie 3 unterschiedliche Dickenbereiche aufweist und zum Teil über oder unter den Lichtleitern 5,6 verläuft und dabei neben der Abstandsfunktion für die Folien 1,2 auch Hohlräume definiert, welche die Bewegung der Lichtleiter 5,6 oder eines Trennelementes 7 erlauben. Die Folie 3 kann aber auch nur als Abstandsfolie eingesetzt werden. Das Ausführungsbeispiel von Figur 5 z.B. ist auch mit direkt auf den Lichtleitern 5,6 aufliegender Deckfolie 2 ausführbar, wobei dann die Folie 3 lediglich etwa so dick wie die Lichtleiter 5,6 auszuführen ist und nur neben -nicht aber auf -diesen angeordnet ist. Die Folie 3 kann von einer Kunststoff-oder Metallfolie gebildet werden. Insbesondere wenn die Folie 3 verschiedene Dickenbereiche aufweisen soll (Fig. 2-5), so können zur Vereinfachung der Herstellung auch mehrere Folien 3 vorgesehen werden, welche übereinandergeschichtet und mit entsprechenden Aussparungen in den einzelnen Schichten versehen werden.

Die Folie 3 kann auch von einem Aufdruck gebildet werden.

Figur 1 zeigt lediglich zwei Koppelungszonen 9 und damit zwei Tastenbereiche. Natürlich können aber sowohl Einzeltasten als auch Tastaturen mit einer Vielzahl beliebig angeordneter Tastenbereiche vorgesehen werden. Die Schaltanordnung kann ebenfalls beliebig gewählt werden. Im gezeigten Beispiel kann ein Lichtsignal ausserhalb der Tastatur in den Lichtleiter 5 eingespiesen werden und wahlweise, je nach Betätigung des entsprechenden oder beider Tastenbereiche, auf einen oder beide der Lichtleiter 6 gegeben werden. Natürlich ist auch eine Einspeisung von aussen in die Lichtleiter 6 möglich und der Abgriff des Lichtsignals am Lichtleiter 5. Dabei nimmt dessen Intensität zu, wenn beide Tastenbereiche betätigt werden ("UND" Funktion).

Am Ausgang der Tastatur werden die Lichtschalter 5,6 in der Regel zusammengefasst und an einen entsprechenden Steckverbinder geführt - (nicht dargestellt). Beliebige andere bekannte Anschlussvarianten für die Lichtleiter können vorgesehen werden. Die Lichtleiter können natürlich auch einzeln weggeführt werden. Ebenso kann auch bereits auf der Tastatur eine optisch-elektrische Schnittstelle vorgesehen werden, was die Zu-und Wegleitung elektrischer Signale ermöglicht.

Figur 2 zeigt eine erste Ausführungsart der Koppelungszone beim Schnitt A-A der Figur 1. Erkennbar sind wiederum die Auflage 1, die Folien 2,3, sowie die Lichtleiter 5,6. Die Dickenmasse der Folien und der Lichtleiter sind nicht massstäblich zu verstehen und auch die Dickenverhältnisse untereinander können von den zur klaren Darstellung gewählten Verhältnissen abweichen.

Im gezeigten Beispiel von Figur 2 liegen sich die Lichtaustritts-bzw. eintrittsöffnungen der Lichtleiter 5 und 6 durch einen Spalt getrennt gegenüber. Unter dem Lichtleiter 6 befindet sich ein Hohlraum. Ohne Druckbeaufschlagung auf die Deckfolie 2 über der Koppelungszone tritt das Licht über den Spalt aus dem einen Lichtleiter in den anderen Lichtleiter über. Dabei ist allerdings wegen des Spaltes eine schlechte Koppelung gegeben, d.h. das Lichtsignal wird in der Tastatur auch im Leitzustand relativ stark abgeschwächt, doch spielt dies für viele Anwendungen keine Rolle. Bei Druckbeaufschlagung biegt sich der Lichtleiter 6 nach unten zur Auflage 1 hin, was den Koppelungsgrad deutlich verkleinert, da sich die Lichtaustrittsöffnung und die Lichteintrittsöffnung nicht mehr in der gleichen Achse gegenüberstehen. Das demgemäss bei Druckbeaufschlagung intensitätsmässig abfallende Lichtsignal zeigt am Ausgang der Tastatur die Betätigung des entsprechenden Tastenbereiches an. Endet die Druckausübung, so geben die Deckfolie 2 und der Lichtleiter 6 aufgrund ihrer Elastizität wieder in den dargestellten Ruhezustand zurück und der Koppelungsgrad wird wieder höher. Nötigenfalls kann auch ein elastisches Element im Hohlraum unter dem Lichtleiter 6 angeordnet werden, wenn die Eigenelastizität des Lichtleiters keine oder eine zu langsame Rückkehr in die Ruhelage bewirkt.

Figur 3 zeigt eine im wesentlichen mit Figur 2 gleiche Ausführungsart, wobei die Lichtleiter 5,6 eine konkave bzw. konvexe Lichtaustrittsöffnung oder Lichteintrittsöffnung aufweisen, welche in der Ruhelage prak tisch ohne Spalt aneinander angrenzen. In Figur 3 ist lediglich zur klareren Darstellung trotzdem ein Spalt gezeigt. Bei dieser Ausführung ist der Koppelungsgrad in Ruhelage wesentlich höher. Dies kann bei Anwendungen, wo das Lichtsignal vor und/oder nach der Tastatur weitere Strecken ohne Verstärkung zurücklegen muss, vorteilhaft sein, erfordert allerdings einen wesentlich erhöhten Arbeitsaufwand bei der Herstellung der Tastatur.

Figur 4 zeigt eine weitere Ausführungsform des Tastenbereiches mit der Koppelungszone im Schnitt. Gleiche Bezugsziffern bezeichnen wiederum gleiche Elemente wie bei den vorhergehenden Figuren. Im gezeigten Beispiel liegen die Lichtleiter 5,6 direkt auf der Auflage 1 auf, und ihre Lichtaustrittsöffnungen bzw. Lichteintrittsöffnungen sind gleichachsig angeordnet und durch einen Spalt getrennt. Die Abstandsfolie 3 liegt mit Abschnitten verminderter Dicke auf den Lichtleiterelementen auf. Die auf der Folie 3 aufliegende Deckplatte oder Deckfolie 2 weist eine Ausformung 7 auf, welche über, und im Ruhezustand ausserhalb des Spaltes liegt. Bei Druckbeaufschlagung taucht die Ausformung 7 in den Spalt zwischen den Lichtleitern 5,6 ein und vermindert den Koppelungsgrad, sofern die Ausformung 7 selber kein Lichtleiter ist. Es ergibt sich somit wiederum ein abgeschwächtes Lichtsignal bei Betätigung des entsprechenden Tastenbereiches.

Besteht das Element 7 aus einem dem Spalt und den Oeffnungen der Lichtleiter angepassten, ebenfalls lichtleitenden Material, erfolgt hingegen bei Betätigung und damit Eintauchen des Elementes eine Verbesserung des Koppelungsgrades, d.h. die Tastenbetätigung führt zu einem stärker werdenden Lichtsignal.

Figur 5 zeigt eine weitere Ausführungsart, wobei gleiche Bezugsziffern wiederum gleiche Elemente wie in den Figuren 1 bis 4 bezeichnen. Die Lichtleiter 5,6 liegen ebenfalls voneinander durch einen Spalt getrennt auf der Auflage 1 auf. Zwischen der mittels der Folie 3 beab standet zur Auflage gehaltenen Deckfolie 2 und der Auflage 1 ist im Spalt ein elastisches transparentes Element 8 angeordnet. Ohne Druckeinwirkung füllt dieses Element den Spalt nur teilweise aus, was einen - schlechten Koppelungsgrad ergibt. Bei Druckbeaufschlagung verformt sich das Element -wie mit gestrichelten Linien angedeutet -was eine annähernde Ausfüllung des Spaltes ergibt und damit eine bessere Koppelung. Wird das Element 8 derart gewählt, dass es sich linsenförmig verformt, kann sogar eine sehr gute Koppelung bei Druckbeaufschlagung erzielt werden.

Bei der Tastatur können ferner zusätzliche Lichtleiter eingesetzt werden, welche eine Beleuchtung der Tastenbereiche bewirken; allenfalls auch als Rückmeldung für eine Tastenbetätigung. Unter der Auflage 1 können ferner mechanische, einen Druckpunkt definierende und/oder ein Geräusch abgebende Elemente vorgesehen werden.

**Ansprüche**

1. Tastatur zur Schaltung von Lichtsignalen, gekennzeichnet durch mindestens zwei signalmässig gekoppelte Lichtleiterelemente (5,6), wobei deren Koppelungsgrad durch Druckeinwirkung auf einen vorbestimmten Bereich der Tastaturoberfläche veränderbar ist.

2. Tastatur nach Anspruch 1, dadurch gekennzeichnet, dass die Tastatur aus mehreren geschichteten Platten und/oder Folien (1,2,3) gebildet wird.

3. Tastatur nach Anspruch 2, gekennzeichnet durch mindestens eine eine Auflage (1) bildende Folie oder Platte und mindestens eine Deckplatte oder Deckfolie (2), zwischen welchen die Lichtleiterelemente (5,6) angeordnet sind.

4. Tastatur nach Anspruch 3, dadurch gekennzeichnet, dass zwischen der Auflage (1) und der Deckplatte oder Deckfolie (2) eine weitere Folie (3) vorgesehen ist, welche teilweise über oder unter den Lichtleitern angeordnet ist und/oder als Abstandshalter zwischen Auflage (1) und Deckfolie (2) ausgestaltet ist.

5. Tastatur nach einem der vorangehenden Ansprüche, dadurch gekennzeichnet, dass der Koppelungsgrad durch Auslenkung mindestens eines Lichtleiterelementes aus einer ersten Lage in eine zweite Lage veränderbar ist.

6. Tastatur nach einem der Ansprüche 1 bis 4, dadurch gekennzeichnet, dass der Koppelungsgrad durch Einführung eines Elementes (7) in den Koppelungsbereich der Lichtleiterelemente veränderbar ist.

7. Tastatur nach einem der Ansprüche 1 bis 4, dadurch gekennzeichnet, dass die optischen Eigenschaften eines im Koppelungsbereich angeordneten Koppelungselementes (8) durch die Druckeinwirkung veränderbar sind.

8. Tastatur nach einem der vorangehenden Ansprüche, dadurch gekennzeichnet, dass auf der Tastatur eine op tisch-elektrische Schnittstelle vorgesehen ist.

9. Tastatur nach einem der vorangehenden Ansprüche, dadurch gekennzeichnet, dass auf der Tastatur Lichtleiter zur Beleuchtung des Tastenbereiches vorgesehen sind.

Fig.1

Fig.2

Fig.3

Fig.4

Fig.5